Europäisches Patentamt

European Patent Office

Office européen des brevets

(11) Veröffentlichungsnummer : **0 414 951 B1**

(12) **EUROPÄISCHE PATENTSCHRIFT**

(45) Veröffentlichungstag der Patentschrift :
**07.12.94 Patentblatt 94/49**

(51) Int. Cl.$^5$ : **H04Q 11/04**

(21) Anmeldenummer : **89116149.9**

(22) Anmeldetag : **31.08.89**

(54) **Verfahren zur Durchschaltung der auf Zeitmultiplexleitungen übertragenen Sprach- oder Dateninformationen durch ein Koppelfeld.**

(43) Veröffentlichungstag der Anmeldung :
**06.03.91 Patentblatt 91/10**

(45) Bekanntmachung des Hinweises auf die Patenterteilung :
**07.12.94 Patentblatt 94/49**

(84) Benannte Vertragsstaaten :
**AT BE CH DE ES FR GB GR IT LI NL SE**

(56) Entgegenhaltungen :
**EP-A- 0 012 135**
**EP-A- 0 323 248**
**INTERNATIONAL CONFERENCE ON COMMU-NICATIONS, Toronto,22.-25.Juni, 1986, Bd. 3,Session 54, Paper 2, Seiten 1-5; New York, US; H.NIWA et al.:"Synchronous Composite Packet Switching for Broadband ISDN"**

(73) Patentinhaber : **SIEMENS AKTIENGESELLSCHAFT Wittelsbacherplatz 2 D-80333 München (DE)**

(72) Erfinder : **Nagler, Werner, Dipl.-Ing. Waltrichstrasse 12 D-8021 Schäftlarn (DE)**
Erfinder : **Krumenacker, Rudolf, Dipl.-Ing. Veit-Stoss-Strasse 50 D-8000 München (DE)**
Erfinder : **Kaderka, Rostislav, Dipl.-Ing. Kurfürstenstrasse 20 D-8034 Germering (DE)**
Erfinder : **Marnet, Frank, Dipl.-Ing. Gundermannstrasse 28 D-8000 München (DE)**

**Beschreibung**

Die Erfindung betrifft ein Verfahren zur Durchschaltung der in Zeitfächern von Zeitkanälen eines digitalen Zeitmultiplex-Fernmeldevermittlungssystems auf Zeitmultiplex-Leitungen übertragenen Sprach/oder Dateninformationen durch ein Koppelfeld, das in Form einer Zeitkoppelstufe realisiert ist, deren zyklisch eingelesener und jeweils im Wechsel dazu wahlfrei ausgelesener einziger Zeitstufenspeicher aus zwei jeweils nacheinander beschriebenen Hälften besteht, an die die Zeitmultiplex-Leitungen angeschlossen sind und deren Speicherkapazität jeweils entsprechend der auf den angeschlossenen Zeitmultiplexleitungen innerhalb eines Abtastpulsrahmens angelieferten Informationen bemessen ist. Ein solches Verfahren ist aus der EP-A-0 323 248 bekannt und auch in der mit der vorliegenden Anmeldung gleichzeitig eingereichten EP-A-0 414 950 eingehend beschrieben.

Die erwähnte Verdoppelung der Speicherkapazität des Zeitstufenspeichers ist erforderlich, wenn über die Zeitkoppelstufe Mehrkanalverbindungen abgewickelt werden sollen, d. h. Verbindungen, die jeweils mehrere Zeitkanäle in Anspruch nehmen, was für Fernmeldedienste in Frage kommt, die eine höhere Bitrate erfordern, als der normale Fernsprechdienst, z. B. Bildfernsprechen oder Faximilesignalübertragung. Bei diesen Mehrkanalverbindungen muß gewährleistet sein, daß die Reihenfolge und die Pulsrahmenzugehörigkeit der zu einer Verbindung gehörenden Teilkanäle auf der Empfangsseite eingehalten werden, selbst wenn die Teilkanäle in beliebiger Aufeinanderfolge auf einen Pulsrahmen verteilt sind. Dies gelingt dadurch, daß nach bestimmten Kriterien das wahlfreie Auslesen einmal aus der einen Hälfte des Zeitstufenspeicher und ein anderes Mal aus der anderen Hälfte desselben erfolgt.

In digitalen Zeitmultiplex-Fernmeldevermittlungssystemen sind maximale Laufzeiten für die Übertragung der Sprach-/oder Dateninformationen vorgeschrieben, die unbedingt eingehalten werden sollen. Wegen der erwähnten Doppelung des Zeitstufenspeichers sind immer zwei zu einem bestimmten Zeitkanal gehörige Abtastproben abgespeichert, wodurch es bei bestimmten Zeitkanalkonstellationen bei der Zeitkanalumsetzung zu Rahmensprüngen und damit zu einer Vergrößerung der Durchlaufzeit um eine Pulsrahmenlänge von 125 μs kommen kann und außerdem in einem solchen Fall nur jede zweite Abtastprobe ausgelesen wird. Eine Verdoppelung des Haltespeichers, der die Ausleseadressen für den Zeitstufenspeicher liefert und damit auch die Verdoppelung der jeweiligen Einstellungen zur Lösung dieses Problems verbietet sich aus Gründen der damit verbundenen dynamischen Belastung der Steuerung.

Bei dem aus der EP-A-0 323 248 bekannten Verfahren ist daher die Möglichkeit vorgesehen, entweder aus der Zeitstufenspeicherhälfte, in die gerade eingeschrieben wird, stammende Information oder aus der dementsperechend anderen Zeitstufenspeicherhälfte stammende Information auf eine Zeitmultiplexleitung für abgehende Übertragungsrichtung gelangen zu lassen. In diesem Zusammenhang werden zwar beim Auslesen entsprechende Speicherplätze beider Zeitstufenspeicherhälften adressiert und ausgelesen, durch entsprechende Beeinflussung eines azyklisch gesteuerten Multiplexers, dessen einer Eingang mit einem Ausgang der einen Speicherhälfte und dessen anderer Eingang mit einem Ausgang der anderen Speicherhälfte verbunden ist und an dessen Ausgang eine Multiplexleitung für abgehende Übertragungsrichtung liegt, ist jedoch dafür gesorgt, daß nur Informationen von einer der beiden Speicherhälften auf die abgehende Zeitmultiplexleitung gelangt.

Die Ansteuerung des Multiplexers erfolgt mit Hilfe eines Steuerbits, das zusammen mit den Lesesteueradressen im Haltespeicher des Zeitstufenspeichers gespeichert ist und das beim Auslesen der betreffenden Lesesteueradrese mittels eines EX-OR-Gliedes mit dem höchstwertigen Bit der entsprechenden Lesesteueradresse verknüpft wird, das ein Ansteuerzähler für den Haltespeicher liefert.

Die Aufgabe der Erfindung besteht darin, die wahlweise Weitergabe von Informationen den obengenannten Bedürfnissen entsprechend entweder aus der einen oder aus der anderen Zeitstufenspeicherhälfte in hardwaresparender Weise zu verbessern.

Diese Aufgabe wird durch die im Kennzeichen des Patentanspruchs 1 angegebenen Merkmale gelöst.

Gemäß einer weiteren Ausgestaltung der Erfindung erfolgt die zyklische Schreibansteuerung des Zeitstufenspeichers und die zyklische Leseansteuerung des Haltespeichers mit einem vorgegebenen Phasenversatz, durch den Besonderheiten der HardwareLösung und der Schnittstellen des Vermittlungssystems Berücksichtigung finden.

Nachstehend wird die Erfindung anhand eines Ausführungsbeispieles unter Bezugnahme auf eine Zeichnung näher erläutert.

In der Zeichnung zeigen:
FIG 1 eine Zeitkoppelstufe eines digitalen Zeitmultiplex-Fernmeldesystems,
FIG 2 die Speicherinhalte des Zeitstufenspeichers und des Haltespeichers einer solchen Zeitkoppelstufe in allgemeiner Form und
FIGUREN 3 und 4 die Speicherinhalte dieser Speicher in spezieller Form im Hinblick auf eine bestimmte Verbindung zweier Teilnehmer.

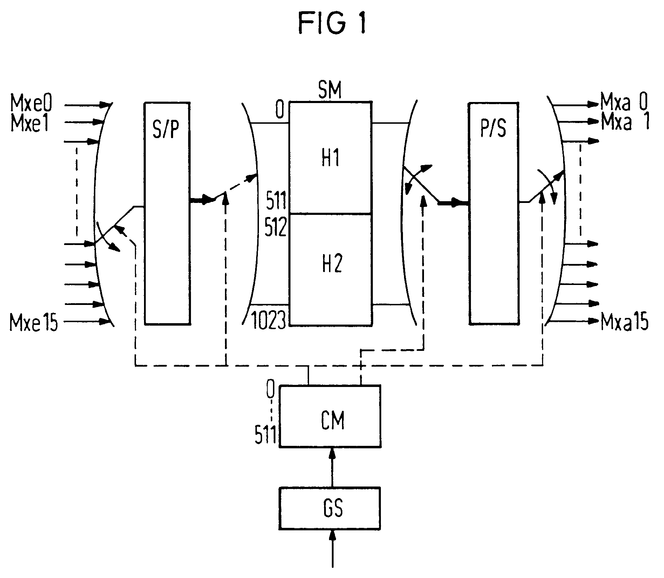

Die Zeitkoppelstufe gemäß FIG 1 kann beispielsweise der Gruppenkoppler einer digitalen Zeitmultiplex-Fernmeldevermittlungs stelle sein, der Bestandteil einer Anschlußgruppe für den Anschluß von Teilnehmeranschlußleitungen ist. Mit einem solchem Gruppenkoppler ist es möglich, zwei beliebige der Zeitkanäle auf den angeschlossenen Leitungen miteinander zu verbinden. Die Anschlußgruppen stehen unter dem Steuereinfluß einer Gruppensteuerung. Pro Vermittlungsstelle sind mehrere solcher Anschlußgruppen vorhanden, zwischen denen über ein zentrales Koppelfeld Verbindungen hergestellt werden können. Die übergeordnete Steuerung der Vermittlungsvorgänge erfolgt durch einen zentralen Koordinationsprozessor.

Bei den gemäß FIG 1 an die Zeitkoppelstufe angeschlossenen eingangsseitigen Multiplexleitungen Mxe0 bis Mxe15 und ausgangsseitig angeschlossenen Multiplexleitungen Mxa0 bis Mxa15 handelt es sich um den erwähnten Teilnehmeranschlußleitungen und Verbindungsleitungen zugeordnete Multiplexleitungen bzw. um wenigstens eine Multiplexleitung, die der Verbindung mit dem erwähnten zentralen Koppelfeld dient.

Auf diesen Multiplexleitungen werden Sprachoder Dateninformationen in serieller Form übertragen. Vor ihrer Weitergabe an die Zeitstufenspeicher SM der Zeitkoppelstufe werden sie durch einen Serien-Parallel-Wandler S/P in Parallelform umgewandelt, bzw. nach dem Auslesen aus dem Zeitstufenspeicher durch einen Parallel-Serien-Wandler P/S wieder in Serienform umgewandelt.

Der Zeitstufenspeicher SM besteht aus zwei Hälften H1 und H2, die unter der angenommenen Voraussetzung von 16 angeschlossenen Multiplexleitungen für ankommende und für abgehende Übertragungsrichtung, auf denen jeweils 32 Zeitkanäle gebildet sind, jeweils 512 Speicherplätze für ein PCM-Wort aufweisen. Das Einschreiben der auf den Multiplexleitungen Mxe0 bis Mxe15 für ankommende Übertragungsrichtung angelieferten Informationen in den Stufenspeicher SM erfolgt zyklisch, wogegen das Auslesen dieser Informationen auf die Multiplexleitungen Mxa0 bis Mxa15 für abgehende Übertragungsrichtung wahlfrei erfolgt.

Die Ansteueradressen für ein derartiges wahlfreies Auslesen werden von einem Haltespeicher CM geliefert, der unter dem Steuereinfluß der Gruppenkopplersteuerung GS steht, die ihrerseits mit dem erwähnten Koordinationsprozessor CP korrespondiert.

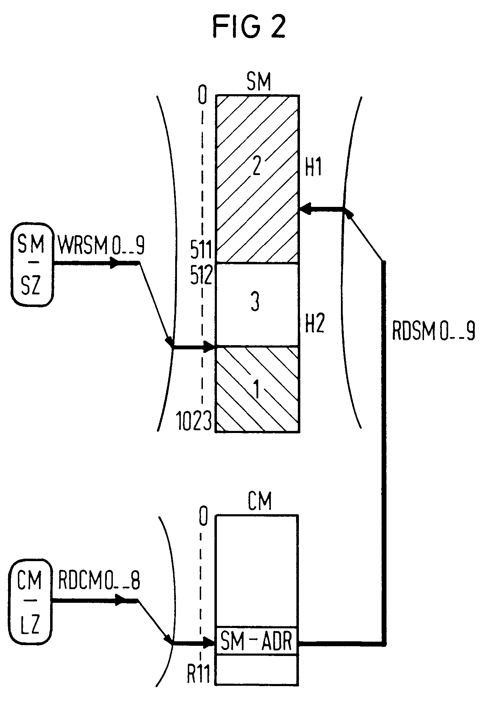

In FIG 2 sind die letztgenannten Verhältnisse noch etwas eingehender veranschaulicht. Es ist hier wieder der Sprachspeicher SM mit seinen insgesamt 1024 Speicherplätzen dargestellt, der im Zusammenhang mit dem zyklischen Einschreiben von einem Schreibzähler SM-SZ angesteuert wird, der nacheinander in Form von zehnstelligen Codeworten WRSM (0...9) 1024 Schreibadressen liefert.

Der vorerwähnte Haaltespeicher CM weist nur halb so viel, also 512 Speicherplätze für Leseadressen zur Leseansteuerung des Zeitstufenspeichers SM auf. Er enthält außerdem Steuerinformationen bezüglich einer evtl. vorzunehmenden Dämpfung und Kodekonvertierung sowie ein jeder Steuerinformation zugeordnetes Rahmensteuerbit, auf das noch eingegangen wird. Dieses Leseadressen werden im Zuge eines Verbindungsaufbaus unter Vermittlung der Gruppensteuerung in den Haltespeicher CM eingetragen. Die Ansteuerung des Haltespeichers erfolgt zyklisch, wozu ein Haltespeicher-Lesezähler CM-LZ nacheinander Leseadresen in Form von neunstelligen Codeworten RDCM (0...8) liefert.

In der FIG 2 ist auch angedeutet, daß im Zeitstufenspeicher zeitweilig aus drei verschiedenen Pulsrahmen stammende Informationen enthalten sein können. So beinhaltet bei der dargestellten Situation die erste Hälfte H1 des Zeitstufenspeichers SM sämtliche der auf den angeschlossenen Multiplexleitungen in einem Pulsrahmen 2 angelieferten Informationen, wogegen bei der zweiten Zeitstufenspeicherhälfte gerade die aus einem Pulsrahmen 1 stammenden Informationen von in einem Pulsrahmen 3 auftretenden Informationen überschrieben werden.

Das Einschreiben in den Zeitstufenspeicher SM und das Auslesen aus diesem Speicher erfolgt jeweils wechselweise, wobei zwischen dem Zählerstand des Schreibzählers SM-SZ und dem denjenigen des Lesezählers CM-LZ des Haltespeichers CM ein konstanter Phasenversatz von beispielsweise 38 Zeitkanalspannen besteht. Dieser Phasenversatz hängt von den konkreten Hardwareverhältnissen der Vermittlungsstelle bzw. den innerhalb dieser Vermittlungsstelle eingehaltenen Schnittstellenbedingungen ab.

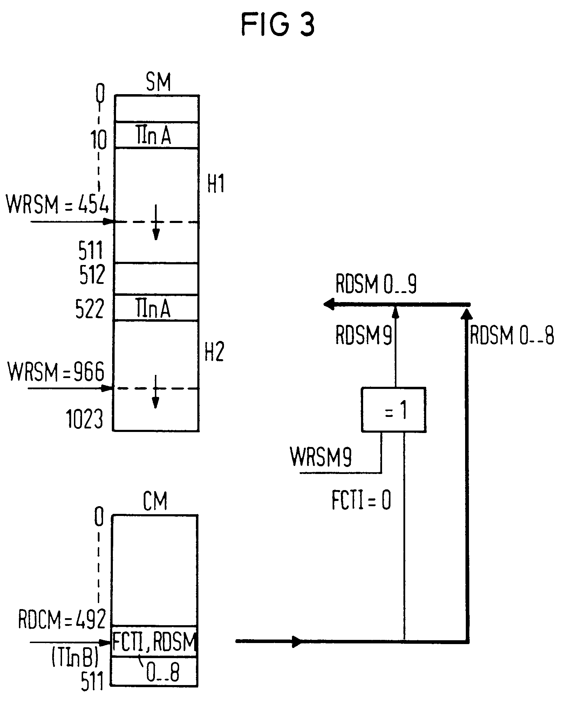

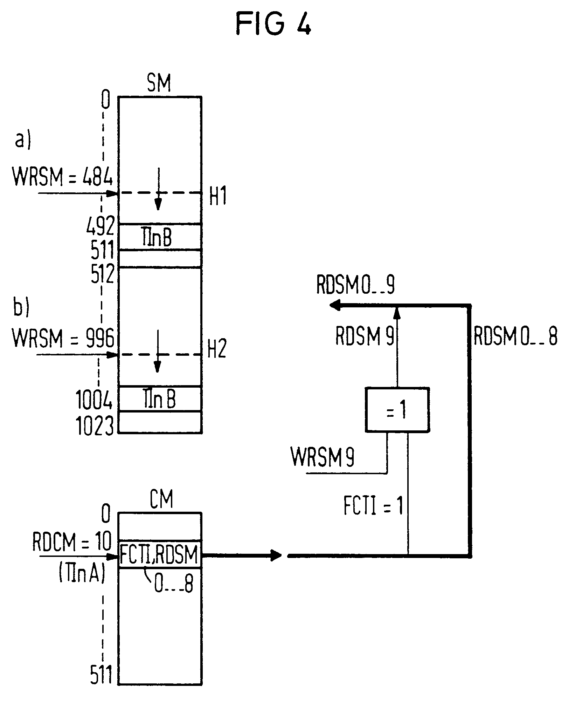

Die FIGUREN 3 und 4 dienen der Veranschaulichung der Verhältnisse, die bei einer Zweierverbindung zwischen einem Teilnehmer A, dem der Zeitkanal 10 zugeordnet ist und bei einem Teilnehmer B, dem der Zeitkanal 492 zugeordnet ist, veranschaulicht sind. Die FIG 3 betrifft dabei die Durchschaltung vom Teilnehmer A zum Teilnehmer B, wogegen die FIG 4 sich auf die Durchschaltung vom Teilnehmer B zum Teilnehmer A bezieht.

Wie die FIG 3 zeigt, enthält demnach die Speicherzelle 10 sowie die einen Pulsrahmen später beschriebene Speicherzelle 522 des Zeitstufenspeichers SM jeweils ein einem Abtastwert der vom Teilnehmer A gelieferten Information entsprechendes PCM-Wort bzw. ein vom Teilnehmer A erzeugtes Datenwort.

In der Speicherzelle 492 des Haltespeichers ist als Auslesesteueradresse ein 8 Bit umfassender niederwertiger Adressenteil RDSM 0...8 enthalten, der also entsprechend den 512 Speicherplätzen je Speicherhälfte des Zeitstufenspeichers SM 512 unterschiedliche Kombinationen annehmen kann, sowie das vorerwähnte Rahmensteuerbit FCTI, das als höchstwertiges Bit den Adressenteil RDSM zur Gesamtadresse ergänzt und dessen Binärwert darüber entscheidet, ob das Auslesen aus dem Zeitstufenspeicher aus derselben oder aus der anderen Hälfte H1, H2 des Zeitstufenspeichers erfolgt, in die gerade eingeschrieben wird.

Diese Entscheidung wird dadurch ausgeführt, daß das Rahmensteuerbit FCTI nach dem Auslesen aus dem Haltespeicher CM mit dem höchstwertigen Bit der 10 Bit umfassenden Schreibadresse WRSM des Zeitstufenspeicher gemäß einer EXCLUSIV-ODER-Funktion verknüpft wird, und daß das dabei entstehende Ergebnisbit der erwähnten Teiladresse RDSM 0...8 als höchstwertiges Bit zur Bildung der eigentlichen Lesesteueradresse RDSM 0...9 für den Zeitstufenspeicher zugeführt wird.

Als Beispiel hierzu sei angenommen, daß in der Speicherzelle 492 des Haltespeichers CM, die dem dem Teilnehmer B zugeordneten Zeitkanal 492 entspricht, als Rahmensteuerbit FCTI ein Bit des Binärwerts 0 eingetragen ist. Die Speicherzelle 492 des Haltespeichers CM wird wegen dem erwähnten Zeitversatz zwischen der Schreibsteuerung des Zeitstufenspeichers SM und der Lesesteuerung des Haltespeichers CM um 38 Zeitkanalspannen entweder gleichzeitig mit dem Einschreiben der Speicherzelle 454 ( = 492 - 38) in der ersten Speicherhäfte H1 des Zeitstufenspeichers oder gleichzeitig mit der Speicherzelle 966 (= 454 + 512) in der zweiten Hälfte H2 des Zeitstufenspeichers angesteuert. Im ersten Fall weist das höchstwertige Bit der Schreibsteueradresse WRSM des Zeitstufenspeichers den Binärwert 0 auf, so daß seine EXCLUSIV-ODER-Verknüpfung mit dem Rahmensteuerbit FCTI ebenfalls den Binärwert 0 ergibt und damit aus der ersten Hälfte H1 des Zeitstufenspeichers, und zwar aus der Speicherzelle 10, die die vom Teilnehmer A stammende Information enthält, ausgelesen wird. Ist hingegen beim Einschreiben des Zeitstufenspeichers die Speicherzelle 966 erreicht, in welchem Falle das höchstwertige Bit der Schreibadresse WRSM den Binärwert 1 aufweist, dann ergibt die Verknüpfung mit dem zu diesem Zeitpunkt aus der Speicherzelle 492 des Haltespeichers ausgelesenen Rahmensteuerbits FCTI ein Bit des Binärwerts 1, womit die Speicherzelle 522 (512 + 10 ) der zweiten Speicherhälfte H2 des Zeitstufenspeichers SM ausgelesen wird. Im geschilderten Fall erfolgt das abwechselnde Auslesen aus den Speicherhälften H1 und H2 immer aus derjenigen Speicherhälfte, in die gerade eingeschrieben wird.

Das Rahmensteuerbit FCTI hat immer dann den Binärwert 0, wenn der Zeitkanal des Teilnehmers, dem durch den betreffenden Auslesevorgang aus dem Zeitstufenspeicher von dem anderen Teilnehmer stammende Information zugeführt werden soll, innerhalb eines Pulsrahmens zeitlich nach dem diesen anderen Teilnehmer zugeordneten Zeitkanal liegt. Im umgekehrten Fall hat das Rahmensteuerbit FCTI immer den Binärwert 1 aufzuweisen. Bezogen auf die Leseteiladresse RDCM 0...8 des Haltespeichers und denjenigen Teil der Schreibsteueradresse WRSM, der für sich die Reihenfolge innerhalb der Speicherhälften H1 und H2 bestimmt, also der Schreibsteueradresse ohne das höchstwertige Bit darstellt, werden unter Berücksichtigung des erwähnten Phasenversatzes zwischen der zyklischen Ansteuerung des Zeitstufenspeichers und des Haltespeichers die obengenannten Forderungen durch den Algorithmus

$$RDCM\ (0...8)\ -\ 38 \geqq WRSM\ (0...8);\ FCTI\ =\ 0$$
$$RDCM\ (0...8)\ -\ 38 \leqq WRSM\ (0...8);\ FCTI\ =\ 1$$

ausgedrückt.

Bei den Speichereinträgen für die Durchschaltung in umgekehrter Übertragungsrichtung, wenn also während der Zeitlage des dem Teilnehmer A zugeordneten Zeitkanals 10 die vom Teilnehmer B gelieferte Information durchgeschaltet werden soll, also innerhalb eines Pulsrahmens das Auslesen (Zeitlage des Zeitkanals 10; Teilnehmer A) vor dem Einschreiben der vom Teilnehmer B stammenden Information (Zeitlage des Kanals 432) erfolgt, nimmt das Rahmensteuerbit FCTI den Binärwert 1 an. Diese Verhältnisse sind in FIG 4 veranschaulicht.

Wie in der FIG 4 gezeigt, sind die vom Teilnehmer B gelieferten PCM-Worte in der Speicherzelle 492 der ersten Hälfte H1 des Zeitstufenspeichers und in der Speicherzelle 1004 (492 + 512) der zweiten Speicherhälfte H2 des Zeitstufenspeichers gespeichert. Wenn nun unter der Leseadresse RDCM = 10 des Haltespeichers CM das Rahmensteuerbit FCTI = 1 ausgelesen und mit dem neunten Bit der Einschreibsteueradresse WRSM des Zeitstufenspeichers verknüpft wird, ergibt sich, sofern dieses neunte Bit den Binärwert 0 aufweist, was dem aktuellen Schreibetrieb in der Hälfte H1 des Zeitstufenspeichers entspricht, für das Ergebnisbit der Binärwert 1 mit der Folge, daß beim Auslesen die mit der Information des Teilnehmers T1n B in der zweiten Hälfte H2 beschriebene Speicherzelle, also die Speicherzelle 1004 ausgelesen wird. Im Falle eines aktuellen Schreibetriebs in dieser zweiten Hälfte H2 des Zeitstufenspeichers erfolgt dagegen das Auslesen aus der Speicherzelle 492 in der ersten Hälfte H1 des Zeitstufenspeichers.

Bei dem erfindungsgemäßen Verfahren ist also immer gewährleistet, daß im Zuge der Durchschaltung einer Verbindung die jüngste Abtastprobe bzw. das jüngste Datenwort ausgelesen wird.

Im Zusammenhang mit der Durchschaltung von Mehrkanalverbindungen wird das Rahmensteuerbit FCTI immer so eingestellt, daß die Pulsrahmenzugehörigkeit der zusammengehörenden Abtastproben bzw. Datenwörtern durch die Zeitkanalumsetzung mittels des Zeitstufenspeichers nicht verändert wird.

## Patentansprüche

1. Verfahren zur Durchschaltung der in Zeitfächern von Zeitkanälen eines digitalen Zeitmultiplex-Fernmeldesystems auf Zeitmultiplex-Leitungen übertragenen Sprach-/oder Dateninformationen durch ein Koppelfeld, das in Form einer Zeitkoppelstufe realisiert ist, deren zyklisch eingeschriebener und bezogen auf die einzelnen Speicherplätze jeweils im Wechsel dazu wahlfrei ausgelesener einziger Zeitstufenspeicher aus zwei jeweils nacheinander beschriebenen Hälften besteht, an die die Zeitmultiplexleitungen angeschlossen sind und deren Speicherkapazität jeweils entsprechend der auf den angeschlossenen Zeitmultiplex-Leitungen innerhalb eines Abtastpulsrahmens angelieferten Informationen bemessen ist, **dadurch gekennzeichnet**, daß in dem der Leseansteuerung dienenden Haltespeicher (CM) der Zeitkoppelstufe eine der Anzahl der Speicherplätze (512) in einer Zeitstufenspeicherhälfte (H1, H2) entsprechende Anzahl von Teiladresen (RDSM 0...8) sowie ein jeweils zugeordnetes Rahmensteuerbit (FCTI) gespeichert ist, dessen Binärwert davon abhängt, ob das Auslesen aus dem Zeitstufenspeicher (SM) aus derselben oder aus der jeweils anderen Hälfte (H1, H2) erfolgen soll, in die gerade eingeschrieben wird, daß beim zyklischen Auslesen der Adress- und Steuerinformationen (RDSM, FCTI) aus dem Haltespeicher (CM) das jeweilige Rahmensteuerbit (FCTI) mit dem höchstwertigen Bit der zu diesem Zeitpunkt gültigen Schreibsteueradresse (WRSM) für den Zeitstufenspeicher entsprechend einer EXCLUSIV-ODER-Funktion verknüpft wird, und daß das dabei entstehende Ergebnisbit der entsprechenden aus dem Haltespeicher ausgelesenen Teiladresse (RDSM 0...8) als höchstwertiges Bit zur Bildung einer Lesesteueradresse (RDSM 0 ...9) für den Zeitstufenspeicher (SM) zugefügt wird, so daß je nach dem Binärwert des Ergebnisbits eine Leseansteuerung bei der einen oder bei der anderen Zeitstufenspeicherhälfte erfolgt.

2. Verfahren nach Anspruch 1, **dadurch gekennzeichnet**, daß die zyklische Schreibansteuerung des Zeitstufenspeichers (SM) und die zyklische Leseansteuerung des Haltespeichers (CM) einen festen Phasenversatz aufweisen.

## Claims

1. Method for the through-connection of voice or data information transmitted on time-division multiplex lines in time cells of time slots of a digital time-division multiplex telecommunication system via a switching network, which is realized in the form of a time-division multiplex switching stage, the single time stage memory of which, which is written cyclically and, in relation to the individual memory locations, is read randomly in alternation therewith in each case, comprises two halves that are successively written in each case, to which the time-division multiplex lines are connected, and the memory capacity of which is dimensioned in each case in accordance with the information supplied on the connected time-division multiplex lines within one sampling pulse frame, characterized in that a number of partial addresses (RDSM 0...8) corresponding to the number of memory locations (512) in a time stage memory half (H1, H2) and also a respective assigned frame control bit (FCTI) are stored in the latch (CM) of the time-division multiplex switching stage serving for the read activation, the binary value of which frame control bit depends on whether reading out of the time stage memory (SM) is to be performed from the same or from the respective other half (H1, H2) which has just been written, in that during the cyclical reading of the address and control information (RDSM, FCTI) out of the latch (CM), the respective frame control bit (FCTI) is gated with the most significant bit of the write control address (WRSM) for the time stage memory valid at this time in accordance with an EXCLUSIVE-OR function, and in that the result bit thus produced is appended to the corresponding partial address (RDSM 0...8) read out of the latch as the most significant bit in order to form a read control address (RDSM 0...9) for the time stage memory (SM) so that, depending on the binary value of the result bit, a read activation is performed in the one or in the other time stage memory half.

2. Method according to Claim 1, characterized in that the cyclical write activation of the time stage memory (SM) and the cyclical read activation of the latch (CM) have a fixed phase offset.

## Revendications

1. Procédé pour transmettre directement des informations vocales et/ou des informations de données, transmises dans des créneaux temporels de canaux temporels d'un système numérique de télécommunication à multiplexage temporel, dans des lignes à multiplexage temporel, au moyen d'un champ de couplage qui est réalisé sous la forme d'un étage de couplage temporel, dont la mémoire unique, qui est enregistrée cycliquement et est lue au choix respectivement en alternance avec l'enregistrement, par rapport aux différents emplacements de mémoire, est constituée de deux moitiés, dans lesquelles l'enregistrement s'effectue respectivement successivement et auxquelles sont raccordées les lignes à multiplexage temporel et dont la capacité de mémoire est dimensionnée respectivement en fonction des informations arrivant pendant une trame d'impulsions d'exploration, dans les lignes à multiplexage temporel raccordées,
caractérisé par le fait
que dans la mémoire de maintien (CM) de l'étage de couplage temporel, qui est utilisée pour la commande de lecture, sont mémorisés un nombre d'adresses partielles (RDSM 0...8), qui correspond au nombre des emplacements de mémoire (512) dans une moitié (H1,H2) de la mémoire d'étage temporel ainsi qu'un bit de commande de trame respectivement associé (FCTI), dont la valeur binaire dépend du fait que la lecture à partir de la mémoire (SM) d'étage temporel doit s'effectuer à partir de la même moitié ou de l'autre moitié respective (H1,H2), dans laquelle l'enregistrement est précisément exécuté,
que lors de la lecture cyclique des informations d'adresses et de commande (RDSM, FCTI) à partir de la mémoire de maintien (CM), le bit de commande de trame respectif (FCTI) est combiné au bit de poids maximum de l'adresse de commande d'enregistrement (WRSM), valable à cet instant, pour la mémoire d'étage temporel, conformément à une fonction OU-EXCLUSIF, et que le bit de résultat obtenu est ajouté à l'adresse partielle correspondante (RDSM 0...8), lue à partir de la mémoire de maintien, en tant que bit de poids maximum pour la formation d'une adresse de commande de lecture (RDSM 0...9) pour la mémoire d'étage temporel (SM), de sorte qu'en fonction de la valeur binaire du bit de résultat, une commande de lecture est exécutée dans une moitié ou dans l'autre moitié de la mémoire d'étage temporel.

2. Procédé suivant la revendication 1, caractérisé par le fait que la commande cyclique d'enregistrement dans la mémoire d'étage temporel (SM) et la commande cyclique de lecture de la mémoire de maintien (CM) présentent un déphasage fixe.

# FIG 1

# FIG 2

# FIG 3

# FIG 4